# EUROPÄISCHE PATENTSCHRIFT

(11) **EP 1 644 647 B1**
(45) Veröffentlichungstag und Bekanntmachung des Hinweises auf die Patenterteilung: **18.10.2006**
(21) Anmeldenummer: 03740422.5
(22) Anmeldetag: 05.07.2003
(51) Int. Cl.: F16C 17/04, F01D 25/16, F16C 33/10

(54) **AXIALGLEITLAGER**
AXIAL FRICTION BEARING
PALIER LISSE AXIAL

(43) Veröffentlichungstag der Anmeldung: 12.04.2006
(73) Patentinhaber: MAN B & W Diesel AG, 86224 Augsburg (DE)
(72) Erfinder: LINK, Hermann, 86356 Neusäss (DE); WERDECKER, Ferdinand, 86153 Augsburg (DE)
(74) Vertreter: Zacharias, Frank L.
(86) Internationale Anmeldenummer: PCT/EP2003/007207
(87) Internationale Veröffentlichungsnummer: WO 2005/003577

(56) Entgegenhaltungen:
- EP-A- 0 840 027
- DE-A- 19 826 460
- GB-A- 716 522
- US-A- 4 348 065
- PATENT ABSTRACTS OF JAPAN vol. 007, no. 001 (M-183), 6. Januar 1983 (1983-01-06) & JP 57 161318 A (TAIHOU KOGYO KK), 4. Oktober 1982 (1982-10-04)
- PATENT ABSTRACTS OF JAPAN vol. 009, no. 139 (M-387), 14. Juni 1985 (1985-06-14) & JP 60 018614 A (TAIHOU KOGYO KK), 30. Januar 1985 (1985-01-30)

## Beschreibung

Die Erfindung bezieht sich auf ein Axialgleitlager zur Lagerung der rotierenden Welle eines mit einem Schmierölkreislauf verbundenen Abgasturboladers gemäss dem Oberbegriff des Anspruchs 1.

Zur Lagerung von Abgasturboladern werden insbesondere hydrodynamische Axialgleitlager, also Gleitlager rotierender Wellen zur Aufnahme von Axialkräften und zur Führung in axialer Richtung, eingesetzt.

Bekanntlich entsteht speziell bei Axialturboladern strömungsbedingt ein hoher Axialschub, der in der Regel eben von einem hydrodynamischen mit profilierten Lagerflächen versehenen Axialgleitlager an das Gehäuse übertragen wird.

So ist beispielsweise aus der EP 0 840 027 A2 ein derartiges Axialgleitlager bekannt, das aus einem fest mit einem Lagergehäuse verbundenen Lagerkörper, einem mit der Welle rotierenden Lagerkamm, sowie zumindest einem zwischen Lagerkörper und Lagerkamm vorgesehenen Schmierspalt, welcher von einer profilierten Kreisringfläche sowie einer ebenen Gleitfläche gebildet wird und mit einer Ölzuführung verbunden ist, besteht. Eine Wellenschulter, d.h. der auf der Welle sitzende Lagerkamm läuft also zumindest mittelbar gegen eine Stirnfläche des feststehenden Lagergehäuses. Die Kreisringfläche weist mehrere radial angeordnete Schmierölnuten auf.

Üblicherweise existieren allerdings im Schmieröl Schmutzpartikel, die die Größenordnung der Schmierspaltdicke haben; bei Verringerung der Schmierspaltdicke steigt die schädigende Wirkung der Schmutzpartikel.

Um diesem Effekt entgegenzuwirken existieren bereits unterschiedliche Lösungen.

Beispielsweise wird gemäss der EP 0 840 027 A2 ein zur hydrodynamischen Druckentwicklung vorteilhafte konvergierende Schmierspalt wird bei solchen Axialgleitlagern dadurch erreicht, dass in Umfangsrichtung orientierte Keilflächen eingearbeitet sind, derart dass sich die kleinste Schmierspalthöhe im Bereich der nächsten Schmierölnut einstellt.

Um bei Axialgleitlagern mit fest eingearbeiteten Keilflächen die auf den Rotor wirkenden strömungsbedingten Axialkräfte aufnehmen zu können, sind bei allen Keilflächen eine benachbarte Rastfläche vorgesehen, über diese sich ein Schmierspaltaustritt hinzieht.

Für die hydrodynamische Schmierung sind konforme Oberflächen charakteristisch. Im Schmierfilm entwickelt sich ein Tragdruck, wenn ein sich verengender Schmierspalt vorliegt, ein viskoser Schmierstoff verwendet wird und eine Gleitbewegung in Richtung des sich verengenden Spaltes stattfindet. Wird genügend Schmierstoff in den konvergierenden Schmierspalt hineingezogen, kommt es zu einer vollkommenen Trennung der Oberflächen durch den Schmierstoff, was für die Verschleissfreiheit und damit für den sicheren Betrieb entscheidend ist.

Um auch der Forderung nach geringen Verlusten und akzeptablen Öldurchsätzen gerecht zu werden, sind Lösungen bekannt, die eine frei schwimmende Axiallagerscheibe zwischen Rotor und Gehäuse verwenden. Die Ausführungsform einer Axiallagerung mit frei schwimmender Scheibe hat einen hohen Ölvolumenstrom, da zwei Schmierspalte existieren und das Öl aufgrund der Schleuderwirkung über die Keilfläche abfließt; es verringert sich dadurch der mögliche Druckaufbau entlang der Keilfläche und die Schmierspaltdicke verringert sich.

So umfasst eine bereits von der Anmelderin erprobte starre Axiallagerung Festsegmentlager mit Schmiernuten, die nach außen von jeweils einem Dichtsteg begrenzt werden; jeder Dichtsteg besitzt eine ihn durchdringende und radial nach außen führende Schmutz- und Kühlnut, diese Lager haben eine gute Tragfähigkeit, jedoch aufgrund der hohen Schergeschwindigkeit hohe Reibungsverluste und eine gewisse Neigung zum sogenannten "Spontanversagen" (siehe unten).

Insbesondere aus der EP 0 840 027 A2 ist eine Axiallagerung mit frei schwimmender Scheibe, die sich um oder mit der Welle dreht, bekannt, mit radialer Begrenzung der Keilfläche durch einen außenliegenden Dichtsteg und Unterbrechung des Dichtsteges durch eine radial nach außen führende Schmutz- bzw. Kühlnut. Durch diesen sowohl die Schmierölnuten als auch die Keilflächen begrenzende Dichtsteg soll erreicht werden, dass im Bereich der Keilflächen weniger Schmieröl nach radial aussen abfliessen kann. Auch diese Lösung hat allerdings den Nachteil, dass eine derartige Ausführungsform ebenfalls zum sog. "Spontanversagen" neigt (siehe unten).

Der Mechanismus des Spontanversagens läuft folgendermassen ab: Minimale Schmierspalthöhe entspricht der Spalthöhe am Dichtsteg. Eine hohe Axialkraft erfordert den (hydrodynamischen) Aufbau größerer Druckkräfte, größerer Druckkräfte erfordern kleinere Schmierspaltdicken, kleinere Schmierspaltdicken bzw. eine kleinere Spalthöhe am Dichtsteg verringern den Ölvolumenstrom. Verringerter Ölvolumenstrom führt allerdings zu weniger Kühlung und höherer mittlerer Öltemperatur, höhere mittlere Öltemperatur führt zu starkem Abfall der Ölviskosität und starker Abfall der Ölviskosität verhindert wiederum den Aufbau hydrodynamischer Druckkräfte. Dieser Effekt dominiert gegenüber dem Effekt der höheren Druckkräfte aufgrund kleinerer Schmierspaltdicke. Die Folge ist Spontanversagen; d.h. plötzliches Zusammenbrechen der hydrodynamischen Druckkräfte und mechanischer Kontakt der Gleitflächen.

Die Aufgabe vorliegender Erfindung besteht nun darin, ein Axialgleitlager der eingangs genannten Art derart weiterzubilden, dass die genannten Nachteile (Verschleiß durch Partikel, hoher Schmieröldurchsatz, Neigung zum Spontanversagen, hohe Lagerverluste) ausgeschlossen werden können, insbesondere ein Axialgleitlager aufzuzeigen, bei dem ein ausreichender Ölvolumenstrom bei ausreichendem Druckaufbau im Schmierspalt gewährleistet ist und damit auf einen aussen liegenden Dichtsteg der profilierten Lagerfläche verzichtet werden kann.

Dies wird durch die kennzeichnenden Merkmale des Anspruchs 1 in Verbindung mit dessen oberbegrifflichen Merkmalen erreicht.

Der hydrodynamische Druckaufbau kommt durch eine Schergeschwindigkeit im Schmieröl im Zusammenhang mit einem konvergierenden Schmierspalt in Richtung der Schergeschwindigkeit zustande. Die Schergeschwindigkeit im Schmieröl setzt sich zusammen aus einer Umfangskomponente (aufgrund relativer Drehbewegung) und einer Radialkomponente (aufgrund Kontinuität). Durch zusätzliche Orientierung der Keilfläche in radialer Richtung kann die Radialkomponente der Schergeschwindigkeit zum Aufbau einer zusätzlichen hydrodynamischen Druckkraft genutzt werden. Die Folge ist eine vergrößerte Schmierspaltdicke und damit eine Verringerung des Verschleißes.

Zum Aufbau einer zusätzlichen hydrodynamischen Druckkraft durch eine Radialkomponente der Schergeschwindigkeit ist eine Radialorientierung der Keilfläche und ein radiales Abfließen des Schmieröls erforderlich und erwünscht. Jedoch existiert aufgrund der Radialorientierung der Keilfläche auch in radialer Richtung ein konvergierender Schmierspalt, so dass ein übermäßiger Schmieröldurchsatz effektiv verhindert wird.

Eine erhöhte Axialkraft bewirkt auch bei einem Axiallager mit radialorientierten Keilflächen eine Verringerung der Schmierspaltdicke und damit auch des Ölvolumenstroms. Aus Kontinuitätsgründen bleibt jedoch die radiale Geschwindigkeitskomponente des Schmieröls näherungsweise konstant. Die zugehörige zusätzlich erzeugte hydrodynamische Druckkraft steigt durch die Verringerung der Schmierspaltdicke an. Dieser Zusammenhang bewirkt, dass der Ölvolumenstrom weniger stark gedrosselt wird als bei einem herkömmlichen Axiallager mit Dichtsteg. Die mittlere Schmieröltemperatur bzw. Schmierölviskosität ist unempfindlicher gegenüber einer erhöhten Axialkraft und die Gefahr des Spontanversagens wird effektiv vermindert.

Radialorientierte Keilflächen lassen sich sowohl in der Ausführungsform einer sogenannten starren Axiallagerung (relative Winkelgeschwindigkeit der Gleitflächen entspricht Winkelgeschwindigkeit der Welle) als auch in der Ausführungsform mit frei schwimmender Scheibe zwischen den beiden Gleitflächen kombinieren. D.h., die erfindungsgemäss profilierte Lagerfläche ist auf einer Schwimmscheibe ausgeführt, die bspw. zwischen einem Lagerkamm auf der rotierenden Welle und einer Gleitfläche indirekt oder direkt am feststehenden Lagergehäuse angeordnet ist. Bei der letztgenannten Ausführungsform kann in besonders vorteilhafter Weise die frei schwimmende Scheibe eine beidseitige erfindungsgemässe Lagerflächenprofilierung, insbesondere eine zweidimensionale "gewendelte" Keilflächenprofilierung erhalten. Wegen der Rotation der frei schwimmender Scheibe mit ca. halber Winkelgeschwindigkeit der Welle und der Existenz von zwei Schmierspalten werden die Lagerungsverluste dann näherungsweise halbiert.

Insbesondere ist das oben beschriebene Prinzip für stehende und rotierende Axialgleitlagerscheiben anwendbar.

Im folgenden soll anhand der Zeichnung die Erfindung verdeutlicht werden. Es zeigen:
- Fig. 1: eine Teilansicht der erfindungsgemäss profilierten Lagerfläche in Form einer Kreisringfläche einer starren Lagerung oder einer Schwimmscheibe,
- Fig. 2: drei Querschnitte durch die ringförmige Lagerfläche der Fig. 1 in radialer Richtung von innen nach aussen entlang der Linien A-A, B-B und C-C in Fig. 1.

Der hier nicht gezeigte Abgasturbolader ist im wesentlichen aus den drei Gehäuseteilen Turbine-, Lager- und Verdichtergehäuse zusammengesetzt. Bekanntlich ist eine Welle im Lagergehäuse in hydraulischen Radiallagern sowie in Axialgleitlagern, die jeweils mit Schmieröl versorgt werden, drehbar gelagert.

Als erfinderisch im Rahmen des beschriebenen Gegenstandes wird die besondere Ausbildung des Axialgleitlagers angesehen, so dass nur die für das Verständnis der Erfindung wesentlichen Teile gezeigt sind.

Ein Axialgleitlagerteil weist eine Lagerfläche in Form einer profilierten Kreisringfläche auf, die mehrere in regelmässigen Abständen über den Umfang der Kreisringfläche verteilte Schmierölnuten 2 aufweist, die radial in ihr verlaufen. Zwischen den benachbarten Schmierölnuten sind jeweils eine Keilfläche 1 und eine daran anschliessende ebene Rastfläche 5 ausgebildet.

Die Schmierölnuten 2 sind am Innenumfang offen und ermöglichen somit die Schmierölzufuhr aus dem Schmierölkreislauf des Abgasturboladers. Am Aussenumfang, d.h. in Richtung des Lagergehäuses sind die Schmierölnuten 2 ebenfalls offen ausgebildet, jedoch jeweils durch einen Kanal 4 verengt.

Die Keilflächen 1 weisen sowohl in Umfangsrichtung der profilierten Kreisringfläche als auch in deren radialer Richtung von innen nach aussen zur Ausbildung eines sich in diese beiden Richtungen verengenden Schmierspalts jeweils eine konvergente Orientierung auf.

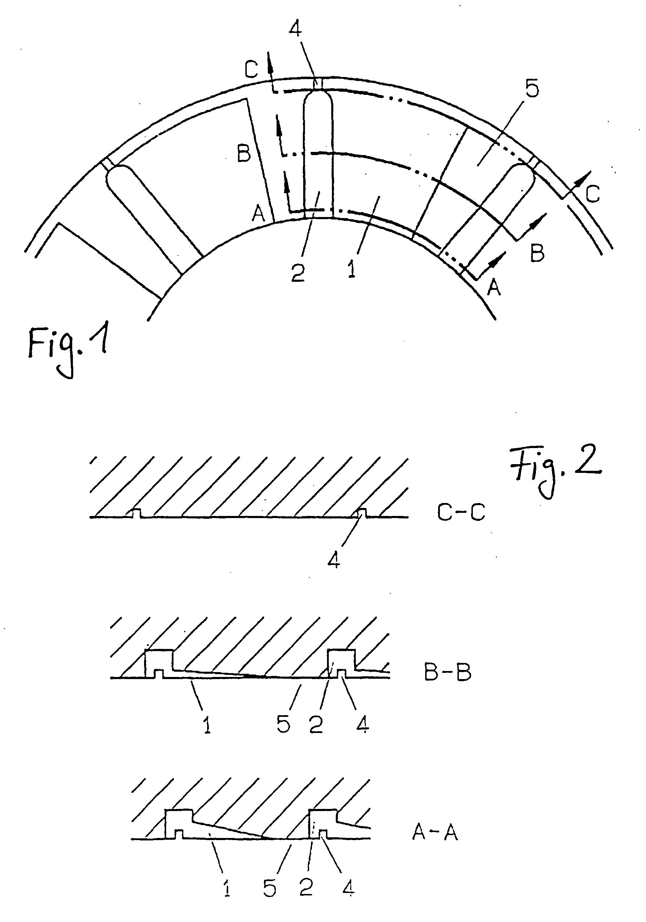

Die konvergente Orientierung der Keilflächen 1 in Umfangsrichtung ist beispielsweise aus der EP 0 840 027 A2 bekannt, die zusätzliche konvergente Orientierung dieser Keilflächen 1 in radialer Richtung ist in der vorliegenden Figur 2 verdeutlicht.

So zeigt der Querschnitt A-A im Bereich des wellennahen Innenumfangs der Kreisringfläche 3 eine vergleichsweise noch grosse Schmierspaltdicke (Keiltiefe) über der Keilfläche, die sich von Schnitt B-B zu Schnitt C-C in Richtung Aussenumfang der Kreisringfläche bis auf das Niveau der Rastflächen 5 reduziert, d.h. die Keilfläche 1 ist vom Innenumfang zum Aussenumfang der Kreisringfläche konvergierend orientiert. Insbesondere in Querschnitt A-A ist aber auch die konvergierende Orientierung der Keilflächen 1 in Umfangsrichtung der Kreisringfläche erkennbar. Aus dieser (zweidimensionalen) Überlagerung dieser beiden Orientierungen resultiert eine "gewendelte" Keilfläche 1, die im Gegensatz zur Ausführungsform einer "Kammerung" der Keilflächen nach aussen mittels eines Dichtsteges (siehe EP 0 840 027 A2) eben auf jeder Keilfläche 1 durchaus genügend Schmieröl in radialer Richtung abfliessen lässt und in voran beschriebener Weise diese Radialkomponente des Schmierölvolumenstroms zusätzlich zum Druckaufbau ausnutzt, während die vorbekannte Variante mit Dichtsteg eben lediglich einen Druckaufbau in Umfangsrichtung der Kreisringfläche mit den eingangs beschriebenen Problemen ermöglicht.

## Patentansprüche

1. Axialgleitlager zur Lagerung der rotierenden Welle eines mit einem Schmierölkreislauf verbundenen Abgasturboladers, das mindestens eine im wesentlichen ebene Gleitfläche und mindestens eine mit dieser einen dazwischenliegende Schmierspalt ausbildende Lagerfläche in Form einer profilierten Kreisringfläche umfasst, wobei die Lagerfläche mehrere in ihr gebildete, radial verlaufende und nach aussen offene Schmierölnuten (2), mehrere Keilflächen (1) und ebene Rastflächen (5) aufweist, derart, dass je eine Keilfläche (1) und je eine ebene Rastfläche (5) gemeinsam zwischen benachbarten Schmierölnuten (2) angeordnet sind, **dadurch gekennzeichnet, dass** die Keilflächen (1) sowohl in Umfangsrichtung als auch in radialer Richtung zur Ausbildung eines sich in beide Richtungen verengenden Schmierspaltes eine konvergierende Orientierung aufweisen.

2. Axialgleitlager nach Anspruch 1, **dadurch gekennzeichnet, dass** die Lagerfläche auf einer Schwimmscheibe ausgeführt ist, die zwischen einem Lagerkamm auf der rotierenden Welle und einer Gleitfläche am feststehenden Lagergehäuse angeordnet ist.

3. Axialgleitlager nach Anspruch 2, **dadurch gekennzeichnet, dass** die Schwimmscheibe beidseitig eine profilierte Kreisringfläche nach Anspruch 1 aufweist, die jeweils mit einer ebenen Gleitfläche zusammenwirkt.

4. Axialgleitlager nach einem der vorangehenden Ansprüche, **dadurch gekennzeichnet, dass** jede ebene Gleitfläche feststehend und jede profilierte Kreisringfläche um die oder mit der Welle rotierend ausgebildet ist.

## Claims

1. An axial friction bearing for mounting the rotating shaft of an exhaust gas turbocharger connected to a lubricating oil circuit, which bearing comprises at least one substantially planar sliding surface and at least one bearing surface in the form of a profiled annular surface which with the sliding surface forms a lubricating gap lying in between, with the bearing surface having a plurality of lubricating oil grooves (2) formed in it, extending radially and open outwardly, a plurality of wedge surfaces (1) and planar stop surfaces (5) in such a way that a respective wedge surface (1) and a respective planar stop surface (5) are arranged together between adjacent lubricating oil grooves (2), **characterised in that** the wedge surfaces (1) both in the circumferential direction and in the radial direction have a converging orientation in order to form a lubricating gap that narrows in both directions.

2. An axial friction bearing according to claim 1, **characterised in that** the bearing surface is realized on a floating disc that is arranged between a bearing collar on the rotating shaft and a sliding surface on the fixed bearing housing.

3. An axial friction bearing according to claim 2, **characterised in that** the floating disc on both sides has a profiled annular surface according to claim 1 that cooperates with a respective planar sliding surface.

4. An axial friction bearing according to one of the preceding claims, **characterised in that** each planar sliding surface is formed so that it is fixed and each profiled annular surface is formed so that it rotates about the or with the shaft.

## Revendications

1. Palier axial lisse pour loger l'arbre rotatif d'un turbocompresseur à gaz d'échappement relié à un circuit de lubrifiant, qui comprend au moins une surface de glissement pour l'essentiel plane et au moins une surface de palier sous la forme d'une surface torique profilée formant avec celle-ci une fente de lubrification intercalée, la surface de palier présentant plusieurs rainures de lubrifiant (2) ouvertes vers l'extérieur et s'étendant radialement, plusieurs surfaces de coincement (1) et surfaces d'accrochage (5) planes, de sorte que chaque fois une surface de coincement (1) et une surface d'accrochage (5) plane sont disposées conjointement entre des rainures de lubrifiant (2) voisines,
**caractérisé en ce que**
les surfaces de coincement (1) présentent une orientation convergente aussi bien dans la direction périphérique que dans la direction radiale pour former une fente de lubrification se rétrécissant dans les deux directions.

2. Palier axial lisse selon la revendication 1,
**caractérisé en ce que**
la surface de palier est réalisée sur un disque flottant disposé entre une crête de palier sur l'arbre rotatif et une surface de glissement sur le logement de palier immobile.

3. Palier axial lisse selon la revendication 2,
**caractérisé en ce que**
le disque flottant présente des deux côtés une surface torique profilée selon la revendication 1 qui coopère chaque fois avec une surface de glissement plane.

4. Palier axial lisse selon l'une quelconque des revendications précédentes,
**caractérisé en ce que**
chaque surface de glissement plane est immobile et chaque surface torique profilée est en rotation autour ou avec l'arbre.
